(19) Europäisches Patentamt
European Patent Office
Office européen des brevets

(11) **EP 1 746 707 A1**

(12) **EUROPÄISCHE PATENTANMELDUNG**

(43) Veröffentlichungstag:
**24.01.2007 Patentblatt 2007/04**

(51) Int Cl.:
*H02K 1/27* (2006.01)

(21) Anmeldenummer: 05015818.7

(22) Anmeldetag: **20.07.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **SIEMENS AKTIENGESELLSCHAFT 80333 München (DE)**

(72) Erfinder:
• **Ackva, Ansgar, Dr.
97082 Würzburg (DE)**
• **Ombach, Grzegorz, Dr.
97209 Veitshöchheim (DE)**

Bemerkungen:
Geänderte Patentansprüche gemäss Regel 86 (2) EPÜ.

(54) **Permanentmagneterregte bürstenlose Synchronmaschine mit eingebetteten Magneten und mit trapezförmig verlaufender elektromagnetischer Kraft**

(57) Die Erfindung betrifft eine permanentmagneterregte bürstenlose Synchronmaschine mit einem Stator und einem Rotor. Der Rotor ist innerhalb des Stators drehbeweglich gelagert. Der Rotor weist eine Vielzahl von Ausnehmungen auf, in welche Permanentmagnete eingebettet sind. Zwischen dem Stator und dem Rotor ist ein Luftspalt vorgesehen. Die dem Stator zugewandte Außenkontur des Rotors ist derart geformt, dass die in die Einzelzahn-Statorwicklung induzierte elektromagnetische Kraft trapezförmig verläuft. Der Maximalwert der elektromagnetischen Kraft liegt in einem elektrischen Winkelbereich von 30° bis 90° durchgehend vor.

FIG 4

EP 1 746 707 A1

**Beschreibung**

Die Erfindung betrifft eine permanentmagneterregte bürstenlose Synchronmaschine mit einem Stator und einem Rotor, wobei der Rotor innerhalb des Stators drehbeweglich gelagert ist, der Rotor eine Vielzahl von Ausnehmungen aufweist, in welche Permanentmagnete eingebettet sind, und zwischen dem Stator und dem Rotor ein Luftspalt vorgesehen ist.

Aus der DE 198 51 883 A1 ist eine permanenterregte Synchronmaschine mit einem aus Blechen geschichteten Läuferblechpaket, in das Permanentmagnete eingebettet sind, bekannt. Bei dieser bekannten Synchronmaschine sind zumindest zwischen einer Ausnehmung zur Aufnahme eines aus zumindest einer Magnetplatte bestehenden Permanentmagneten und dem Luftspalt der Synchronmaschine Magnetflusssperren vorgesehen, die als Schlitze bzw. Materialausnehmungen realisiert sind. Ferner enthält die bekannte Synchronmaschine Mittel, die in dem Luftspalt ein sinusförmiges Erregerfeld erzeugen. Dies wird dadurch erreicht, dass die dem Luftspalt zugewandte Kontur des Läuferblechpaketes derart ausgebildet ist, dass sich das gewünschte sinusförmige Erregerfeld ergibt.

Ausgehend von diesem Stand der Technik liegt der Erfindung die Aufgabe zugrunde, eine permanentmagneterregte bürstenlose Synchronmaschine mit höherer Leistung und reduzierter Quadraturinduktanz anzugeben.

Diese Aufgabe wird durch eine permanentmagneterregte bürstenlose Synchronmaschine mit den im Anspruch 1 angegebenen Merkmalen gelöst. Vorteilhafte Ausgestaltungen und Weiterbildungen der Erfindung sind in den abhängigen Patentansprüchen angegeben.

Die Vorteile einer permanentmagneterregten bürstenlosen Synchronmaschine mit den im Anspruch 1 angegebenen Merkmalen bestehen insbesondere darin, dass aufgrund der trapezförmig verlaufenden elektromagnetischen Kraft und der reduzierten Quadraturinduktanz die Leistung der Maschine im Vergleich zu einer bekannten Maschine um 12% und mehr erhöht ist. Weiterhin wird durch die trapezförmige elektromagnetische Kraft sichergestellt, dass nur vergleichsweise niedrige Drehmomentschwankungen auftreten. Ferner weist eine Synchronmaschine mit den im Anspruch 1 angegebenen Merkmalen im Vergleich zu Maschinen, bei denen die Magnete an der Oberfläche des Rotors befestigt sind, und im Vergleich zu Maschinen mit in den Rotor eingebetteten Permanentmagneten und runder Außenkontur des Rotors ein geringeres Rastmoment auf. Die Phasenwicklungen können einfach aufgebracht werden, insbesondere im Sinne einer konzentrischen Wicklung, so dass die Serienfertigung einer bürstenlosen Synchronmaschine gemäß der Erfindung einfach durchführbar ist.

Weitere Vorteile der Erfindung bestehen darin, dass aufgrund der allseitigen Umschließung der Permanentmagnete durch Rotormaterial ein guter Korrosionsschutz für die Permanentmagnete besteht und dass die Permanentmagnete im Vergleich zu Maschinen, bei denen die Magnete auf der Oberfläche des Rotors positioniert sind, besser gegen eine Entmagnetisierung geschützt sind. Ferner erübrigt sich in der Praxis ein den jeweiligen Permanentmagneten umschließender Sicherheitsring, der bei bekannten Maschinen dazu vorgesehen ist, ein Ablösen der Permanentmagneten vom Rotor zu verhindern.

Sind die zwischen benachbarten Permanentmagneten vorgesehenen radial gerichteten Stege dünn ausgebildet, dann ist die Flussverteilung zwischen zwei benachbarten Permanentmagneten bzw. Polen reduziert. Es muss lediglich darauf geachtet werden, dass diese Stege dick genug sind, um den im Betrieb auftretenden mechanischen Belastungen gerecht zu werden.

Weitere vorteilhafte Eigenschaften der Erfindung ergeben sich aus deren beispielhafter Erläuterung anhand der Figuren. Es zeigt

Figur 1    ein Ausführungsbeispiel für einen bürstenlosen Synchronmotor mit Permanentmagneten im Rotor,

Figur 2    eine Querschnittsdarstellung zur Veranschaulichung des Stators im unbewickelten Zustand,

Figur 3    Ausführungsbeispiele für die Zusammenschaltung der Phasenwicklungen des Stators,

Figur 4    eine Querschnittsdarstellung eines Rotorsegmentes zur Veranschaulichung der Außenkontur des Rotors,

Figur 5    ein Diagramm zur Veranschaulichung des Verlaufs der elektromagnetischen Kraft EMK in Abhängigkeit vom elektrischen Winkel $\alpha_{el}$ und

Figur 6    ein Diagramm zur Veranschaulichung des Verlaufs der Ausgangsleistung der Synchronmaschine in Abhängigkeit von der Drehgeschwindigkeit des Rotors.

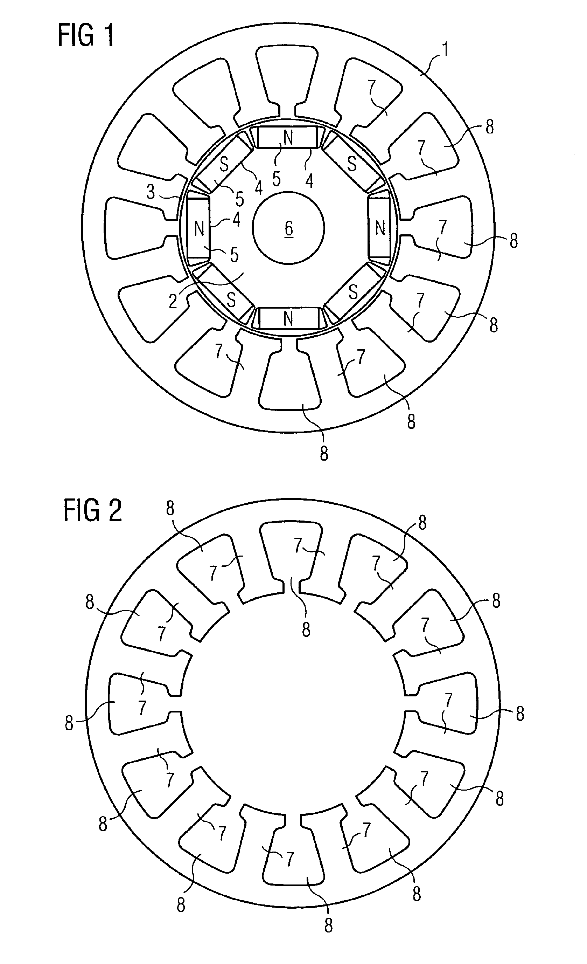

Die Figur 1 zeigt ein Ausführungsbeispiel für einen bürstenlosen Synchronmotor. Dieser weist einen Stator 1 und einen Rotor 2 auf. Der Rotor 2 ist innerhalb des Stators 1 drehbeweglich gelagert, wobei zwischen dem Rotor und dem Stator ein Luftspalt 3 besteht.

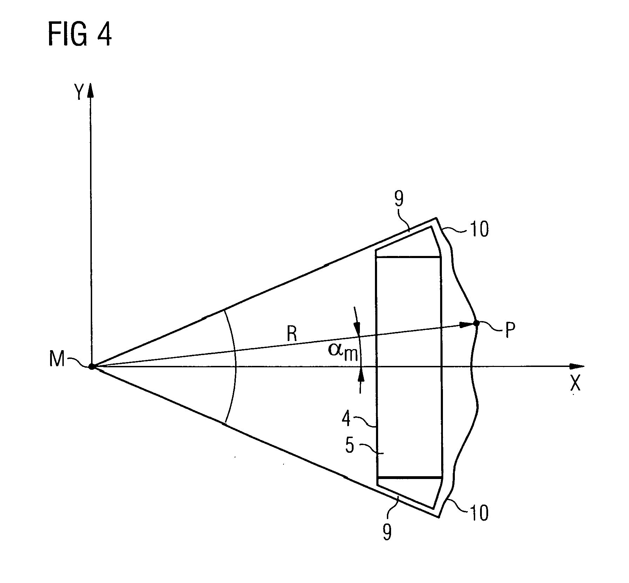

Der Rotor 2 ist mit einer Vielzahl von Ausnehmungen 4 versehen, in welche Permanentmagnete 5 eingebettet sind. Die Permanentmagnete haben vorzugsweise einen rechteckigen Querschnitt und sind vollständig von Rotormaterial umgeben. Die Ausnehmungen 4 sind in einer Richtung senkrecht zur Radialrichtung jeweils größer als die Permanentmagnete. Weiterhin befinden sich die Aussparungen in der Nähe des Außenrandes des Rotors 2 und sind in ihrer Gesamtheit etwa ringförmig um die Rotorwelle 6 angeordnet. Zwischen jeweils zwei benachbarten Ausnehmungen 4 ist ein radial gerichteter Steg 9 vorgesehen, der unten anhand der Figur 4 näher erläutert wird. Die einander jeweils benachbarten Permanentmagnete 5 bilden die Pole des Rotors 2. Es wechseln sich Nord- und Südpole ab, wie es in der Figur 1 durch die Buchstaben N und S zum Ausdruck kommt.

Der Stator 1 weist eine Vielzahl von Statorzähnen 7 auf, zwischen denen sich Statornuten 8 befinden. Diese Statorzähne werden mit der Statorwicklung versehen, die beispielsweise aus drei Phasenwicklungen besteht.

Die Figur 2 zeigt eine Querschnittsdarstellung zur Veranschaulichung des Stators 1 von Figur 1. Dieser weist im gezeigten Ausführungsbeispiel insgesamt zwölf Statorzähne 7 und demzufolge auch zwölf Statornuten 8 auf. Die Statorzähne werden mit der Statorwicklung versehen, die aus drei Phasenwicklungen besteht, die in bestimmter Weise miteinander verschaltet sind. Jeder Phasenwicklung gehören vier Spulen an, wobei jede Spule im Sinne einer Einzelzahnwicklung um einen der Statorzähne gewickelt wird.

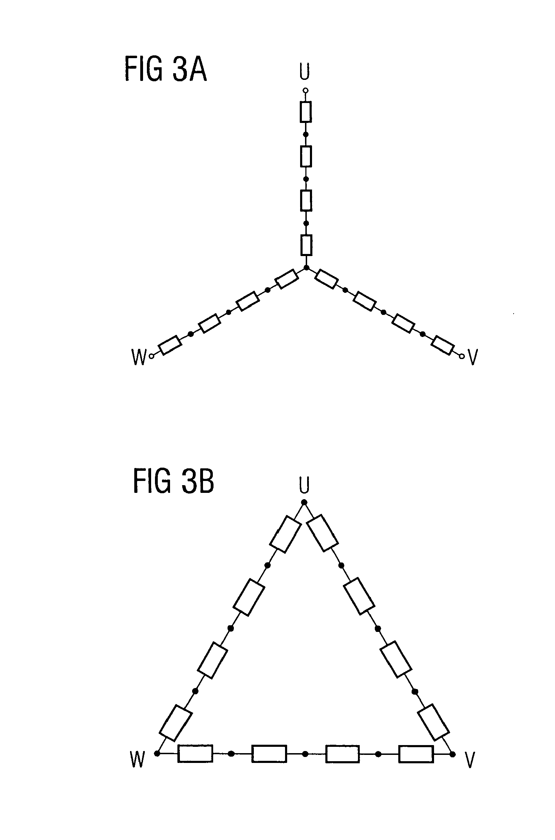

Die Figur 3 zeigt Ausführungsbeispiele für die Zusammenschaltung der Phasenwicklungen des Stators. Gemäß der Figur 3a sind die drei Phasenwicklungen sternförmig miteinander verschaltet. Gemäß der Figur 3b sind die drei Phasenwicklungen dreieckförmig miteinander verschaltet.

Bei den meisten bekannten permanentmagneterregten bürstenlosen Synchronmaschinen ist die Außenkontur des Rotors rund ausgebildet.

In der eingangs genannten DE 198 51 883 A1 ist die Außenkontur des in Form eines Läuferblechpaktes realisierten Rotors derart ausgebildet, dass sich ein sinusförmiges Erregerfeld im Luftspalt zwischen dem Rotor und dem Stator ergibt. Bei der in der DE 198 51 883 A1 beschriebenen Lösung wird insgesamt im Vergleich zu bürstenlosen Synchronmaschinen mit runder Außenkontur des Rotors bei gleichem Nennstrom eine Erhöhung des Drehmoments und damit der Nennleistung der Synchronmaschine erreicht.

Die Erfinder der vorliegenden Erfindung haben nunmehr erkannt, dass eine weitere Steigerung der Nennleistung der Synchronmaschine dann erreicht wird, wenn die dem Stator zugewandte Außenkontur des Rotors derart geformt wird, dass die in die Statorwicklung induzierte elektromagnetische Kraft EMK trapezförmig verläuft und der Maximalwert der elektromagnetischen Kraft in einem elektrischen Winkelbereich von 30° bis 90° durchgehend vorliegt. Durch eine derartige Formung der Außenkontur des Rotors wird in vorteilhafter Weise zusätzlich erreicht, dass die Quadraturinduktanzen der Maschine reduziert sind. Ein trapezförmiger Verlauf der elektromagnetischen Kraft im Sinne der Erfindung bedeutet, dass die elektromagnetische Kraft eine steile Anstiegsflanke, einen langen Plateaubereich und eine steile Abstiegsflanke aufweist. Der Plateaubereich liegt - wie bereits vorstehend angegeben wurde - in einem elektrischen Winkelbereich $\alpha_{el}$ von 30° bis 90° durchgehend vor.

Die Figur 4 zeigt eine Querschnittsdarstellung eines Rotorsegmentes zur Veranschaulichung der Außenkontur des Rotors im Bereich dieses Segmentes. In dieser Figur ist mit R der Abstand eines am äußeren Rand des Rotors liegenden Punktes P vom Mittelpunkt M der Rotorwelle und mit $\alpha_m$ der Winkel bezeichnet, den die die Punkte M und P verbindende Gerade zu der die Polmitte definierenden Gerade einnimmt. Die Außenkontur des Rotors wird durch die folgende Beziehung beschrieben:

$$R(\alpha_m) = R_1 - \frac{G}{X_0 + X_1 \cos 1p \cdot \alpha_m \pm X_3 \cos 3p \cdot \alpha_m \pm \ldots \pm X_{11} \cos 11p \cdot \alpha_m}$$

Dabei sind:

R1       der Innenradius des Stators,

R,$\alpha_m$       die Koordinaten eines auf dem Außenrand des Rotors gelegenen Punktes im sphärischen Koordinatensystem,

p       die Anzahl der Polpaare,

G       die kleinste Luftspaltbreite zwischen Rotor und Stator und

X0 ... X11    harmonische Amplituden.

Weiterhin geht aus der Figur 4 hervor, dass die Ausnehmung 4 in der Figur oben und unten den Permanentmagneten 5 übersteht und sowohl oben als auch unten von einem dünnen, radial gerichteten Steg 9 begrenzt ist, der aus dem Rotormaterial, d. h. aus geschichtetem Blech, besteht. Senkrecht bzw. im rechten Winkel zum Steg 9 ist an dessen radialem äußeren Ende ein weiterer Steg 10 vorgesehen. Dieser weiterer Steg 10 begrenzt den Überstand der Aussparung 4 über den Permanentmagneten 5 in Richtung des äußeren Randes des Rotors und bildet in diesem Bereich gleichzeitig den äußeren Rand des Rotors. Beide Stege sind dünn ausgebildet. Dadurch wird erreicht, dass die Flussverteilung zwischen zwei benachbarten Magnetpolen reduziert wird. Es muss lediglich darauf geachtet werden, dass die genannten Stege dick genug sind, um den im Betrieb auftretenden mechanischen Belastungen gerecht zu werden.

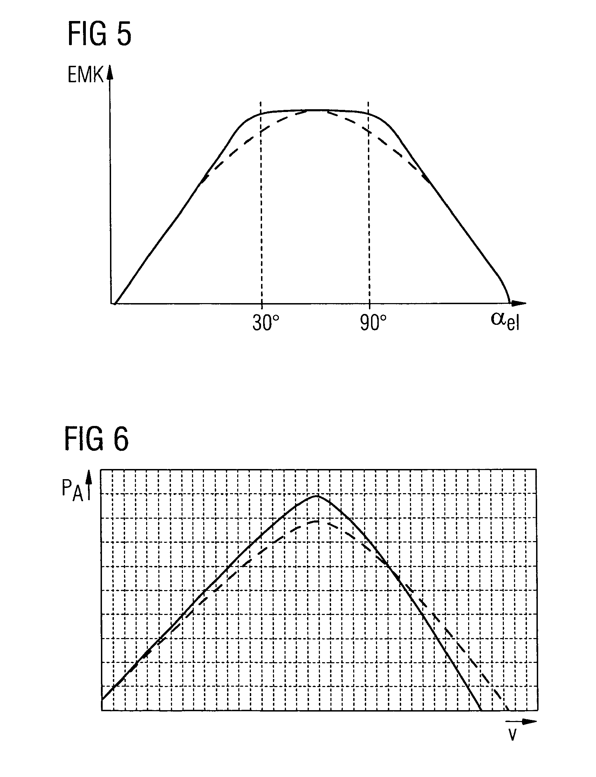

Die Figur 5 zeigt ein Diagramm zur Veranschaulichung des Verlaufs der in einer Phasenwicklung des Stators induzierten elektromagnetischen Kraft EMK in Abhängigkeit vom elektrischen Winkel $\alpha_{el}$. Der elektrische Winkel $\alpha_{el}$ ist wie folgt definiert:

$$\alpha_{el} \; = \; p \bullet \alpha_m,$$

wobei $\alpha_{el}$ der elktrische Winkel, p die Polpaarzahl und $\alpha_m$ der mechanische Winkel ist, wie er in der Figur 4 dargestellt ist.

In der Figur 5 ist längs der Ordinate die elektromagnetische Kraft EMK und längs der Abszisse der elektrische Winkel $\alpha_{el}$ aufgetragen. Die durchgezogene Linie zeigt dabei den Verlauf der elektromagnetischen Kraft bei einer Synchronmaschine gemäß der Erfindung, während die gestrichelte Linie den Verlauf der elektromagnetischen Kraft bei einer bekannten Maschine zeigt. Es ist ersichtlich, dass die elektromagnetische Kraft bei einer Synchronmaschine gemäß der Erfindung steil ansteigt, einen langen Plateaubereich hat, der in einem elektrischen Winkelbereich von 30° bis 90° durchgehend vorliegt, und dann steil abfällt.

Die Figur 6 zeigt ein Diagramm zur Veranschaulichung des Verlaufs der Ausgangsleistung $P_A$ einer Synchronmaschine in Abhängigkeit von der Drehgeschwindigkeit v des Rotors. Dabei ist der Verlauf der Ausgangsleistung einer Synchronmaschine gemäß der Erfindung mit der durchgezogenen Linie und der Verlauf der Ausgangsleistung einer bekannten Synchronmaschine mit der gestrichelten Linie gezeichnet. Es ist ersichtlich, dass die Ausgangsleistung einer Synchronmaschine gemäß der Erfindung in einem weiten Drehzahlbereich größer ist als die Ausgangsleistung einer bekannten Synchronmaschine. Insbesondere liegt der Maximalwert der Nennleistung bei einer Synchronmaschine gemäß der Erfindung etwa 12% über dem Maximalwert der Nennleistung einer bekannten Maschine.

**Patentansprüche**

1. Permanentmagneterregte bürstenlose Synchronmaschine mit einem Stator und einem Rotor, wobei der Stator mit einer Einzelzahn-Statorwicklung versehen ist, die mehrere Phasenwicklungen aufweist, der Rotor innerhalb des Stators drehbeweglich gelagert ist, der Rotor eine Vielzahl von Ausnehmungen aufweist, in welche Permanentmagnete eingebettet sind, und zwischen dem Stator und dem Rotor ein Luftspalt vorgesehen ist, **dadurch gekennzeichnet, dass** die dem Stator (1) zugewandte Außenkontur des Rotors (2) derart geformt ist, dass die in die Statorwicklung induzierte elektromagnetische Kraft (EMK) trapezförmig verläuft und der Maximalwert der elektromagnetischen Kraft in einem elektrischen Winkelbereich von 30° bis 90° durchgehend vorliegt.

2. Permanentmagneterregte bürstenlose Synchronmaschine nach Anspruch 1, **dadurch gekennzeichnet, dass** der Stator (1) drei Phasenwicklungen aufweist, die sternförmig miteinander verschaltet sind (Figur 3a).

3. Permanentmagneterregte bürstenlose Synchronmaschine nach Anspruch 1, **dadurch gekennzeichnet, dass** der Stator (1) drei Phasenwicklungen aufweist, die dreieckförmig miteinander verschaltet sind (Figur 3b).

4. Permanentmagneterregte bürstenlose Synchronmaschine nach Anspruch 2 oder 3, **dadurch gekennzeichnet, dass** jede der Phasenwicklungen mehrere in Reihe geschaltete Spulen aufweist, wobei jede der Spulen im Sinne einer Einzelzahnwicklung um einen der Statorzähne gewickelt ist.

5. Permanentmagneterregte bürstenlose Synchronmaschine nach einem der vorhergehenden Ansprüche, **dadurch gekennzeichnet, dass** die Permanentmagnete (5) rechteckförmig ausgebildet sind.

6. Permanentmagneterregte bürstenlose Synchronmaschine nach einem der vorhergehenden Ansprüche, **dadurch**

**gekennzeichnet, dass** die Permanentmagnete (5) jeweils allseitig von Rotormaterial umschlossen sind.

7. Permanentmagneterregte bürstenlose Synchronmaschine nach Anspruch 6, **dadurch gekennzeichnet, dass** die Aussparungen (4) in einer Richtung senkrecht zur Radialrichtung jeweils größer sind als die Permanentmagnete (5), die Aussparungen (4) in der Nähe des Außenrandes des Rotors (2) vorgesehen sind und zwischen benachbarten Aussparungen radial gerichtete Stege (9) vorgesehen sind.

8. Permanentmagneterregte bürstenlose Synchronmaschine nach Anspruch 7, **dadurch gekennzeichnet, dass** die radial gerichteten Stege (9) jeweils in ihren radial äußeren Endbereichen in rechtwinklig zu den radial gerichteten Stegen (9) verlaufende Außenstege (10) übergehen.

9. Permanentmagneterregte bürstenlose Synchronmaschine nach einem der vorhergehenden Ansprüche, **dadurch gekennzeichnet, dass** die Außenkontur des Rotors durch folgende Beziehung definiert wird:

$$R(\alpha_m) = R_1 - \frac{G}{X_0 + X_1 \cos 1p \bullet \alpha_m \pm X_3 \cos 3p \bullet \alpha_m \pm \ldots \pm X_{11} \cos 11p \bullet \alpha_m}$$

**Geänderte Patentansprüche gemäss Regel 86(2) EPÜ.**

9. Permanentmagneterregte bürstenlose Synchronmaschine nach einem der vorhergehenden Ansprüche, **dadurch gekennzeichnet, dass** die Außenkontur des Rotors durch folgende Beziehung definiert wird:

$$R(\alpha_m) = R_1 - \frac{G}{X_0 + X_1 \cos 1p \bullet \alpha_m \pm X_3 \cos 3p \bullet \alpha_m \pm \ldots \pm X_{11} \cos 11p \bullet \alpha_m}$$

wobei

R1 der Innenradius des Stators,
R,$\alpha_m$ die Koordinaten eines auf dem Außenrand des Rotors gelegenen Punktes im sphärischen Koordinatensystem,
p die Anzahl der Polpaare,
G die kleinste Luftspaltbreite zwischen Rotor und Stator und
X0 ... X11 harmonische Amplituden

sind.

FIG 1

FIG 2

FIG 3A

FIG 3B

FIG 4

## FIG 5

## FIG 6

**Europäisches Patentamt**

## EUROPÄISCHER RECHERCHENBERICHT

Nummer der Anmeldung

EP 05 01 5818

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 242 837 B1 (MATSUNOBU YUTAKA ET AL) 5. Juni 2001 (2001-06-05) | 1-6 | H02K1/27 |
| A | * Spalte 8, Zeile 47 - Spalte 9, Zeile 27; Abbildungen 1,12,13 * | 9 | |
| X | US 2003/048024 A1 (CHU M. T ET AL) 13. März 2003 (2003-03-13) * Absätze [0003], [0026]; Abbildungen 5A,5B,6-8 * | 1-6 | |
| X | US 6 208 054 B1 (TAJIMA FUMIO ET AL) 27. März 2001 (2001-03-27) * Spalte 7, Zeile 33 - Spalte 8, Zeile 57 * * Spalte 10, Zeile 7 - Zeile 33; Abbildungen 1,4A,4B,8 * | 1-8 | |
| A | US 6 911 756 B1 (CHANG CHIO-SUNG) 28. Juni 2005 (2005-06-28) * Spalte 3, Zeile 6 - Zeile 21; Abbildungen 6,7 * | 9 | |
| A | EP 1 420 499 A (MINEBEA CO., LTD) 19. Mai 2004 (2004-05-19) * Absätze [0022], [0031] - Absatz [0034]; Abbildung 3 * | 9 | RECHERCHIERTE SACHGEBIETE (Int.Cl.7) H02K |
| A | EP 1 542 335 A (NISSAN MOTOR CO., LTD) 15. Juni 2005 (2005-06-15) * Absatz [0004]; Abbildung 13 * | 9 | |

Der vorliegende Recherchenbericht wurde für alle Patentansprüche erstellt

| Recherchenort | Abschlußdatum der Recherche | Prüfer |
|---|---|---|
| München | 30. August 2005 | Sedlmeyer, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

# EP 1 746 707 A1

**ANHANG ZUM EUROPÄISCHEN RECHERCHENBERICHT**
**ÜBER DIE EUROPÄISCHE PATENTANMELDUNG NR.**                    EP 05 01 5818

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-08-2005

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| US | 6242837 | B1 | 05-06-2001 | JP | 3658507 | B2 | 08-06-2005 |
| | | | | JP | 11164501 | A | 18-06-1999 |
| | | | | JP | 2001145284 | A | 25-05-2001 |
| | | | | US | 2001030480 | A1 | 18-10-2001 |
| US | 2003048024 | A1 | 13-03-2003 | TW | 577658 | Y | 21-02-2004 |
| | | | | JP | 2003088015 | A | 20-03-2003 |
| US | 6208054 | B1 | 27-03-2001 | JP | 3308828 | B2 | 29-07-2002 |
| | | | | JP | 10126985 | A | 15-05-1998 |
| | | | | US | 2005162029 | A1 | 28-07-2005 |
| | | | | US | 2003102757 | A1 | 05-06-2003 |
| | | | | US | 2001002094 | A1 | 31-05-2001 |
| | | | | US | 2005023920 | A1 | 03-02-2005 |
| US | 6911756 | B1 | 28-06-2005 | KEINE | | | |
| EP | 1420499 | A | 19-05-2004 | EP | 1420499 | A1 | 19-05-2004 |
| | | | | JP | 2004173491 | A | 17-06-2004 |
| | | | | US | 2004095033 | A1 | 20-05-2004 |
| EP | 1542335 | A | 15-06-2005 | JP | 2005176424 | A | 30-06-2005 |
| | | | | CN | 1627600 | A | 15-06-2005 |
| | | | | EP | 1542335 | A1 | 15-06-2005 |
| | | | | US | 2005121990 | A1 | 09-06-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19851883 A1